# EUROPÄISCHE PATENTSCHRIFT

(11) **EP 1 338 230 B1**
(45) Veröffentlichungstag und Bekanntmachung des Hinweises auf die Patenterteilung: **17.05.2006**
(21) Anmeldenummer: 02100161.5
(22) Anmeldetag: 21.02.2002
(51) Int. Cl.: A47J 27/21, A47J 31/00

(54) **Beheizbares Bechersystem**
Mug heating system
Système chauffant pour gobelet

(43) Veröffentlichungstag der Anmeldung: 27.08.2003
(73) Patentinhaber: Ford Global Technologies, LLC., Dearborn MI 48126 (US)
(72) Erfinder: Kara, Levent, 51469, Koeln (DE)
(74) Vertreter: Drömer, Hans-Carsten

(56) Entgegenhaltungen:
- FR-A- 2 766 258
- US-A- 3 915 079
- US-A- 5 829 987
- US-A- 6 121 585
- US-B1- 6 314 867

## Beschreibung

Die Erfindung betrifft ein beheizbares Bechersystem enthaltend einen Becher mit einem elektrischen Heizelement und mit elektrischen Kontakten für die Stromzufuhr zum Heizelement sowie einen Becherhalter mit elektrischen Kontakten für die Stromzufuhr zum Becher.

Aus der US 6 121 585 ist ein System mit einem Becher und einem zugehörigen Becherhalter bekannt, welches insbesondere in einem Kraftfahrzeug verwendet werden kann. Der Becher enthält dabei ein Heizelement mit einem PTC-Widerstand (PTC: positive temperature coefficient) sowie zwei an der Unterseite des Bechers gelegene elektrische Kontakte für die Stromzufuhr zum Heizelement. Der Becherhalter weist an hierzu korrespondierenden Positionen elektrische Kontakte auf, die als Federelemente ausgebildet sind. Wenn der Becher in den Becherhalter eingesetzt wird, berühren sich die entsprechenden elektrischen Kontakte, was eine Stromzufuhr zum Heizelement und damit eine kontrollierte Beheizung des Bechers ermöglicht. Nachteilig bei einem derartigen System ist jedoch, daß die Berührung zwischen den elektrischen Kontakten nur punktweise erfolgt, so daß bei einem leicht schrägen Sitz des Bechers im Becherhalter der Kontakt unterbrochen sein kann. Ferner kann der verhältnismäßig hohe Stromfluß an den Kontaktpunkten dort zu einer unerwünschten Erwärmung führen.

Vor diesem Hintergrund war es Aufgabe der vorliegenden Erfindung, ein beheizbares Bechersystem bereitzustellen, welches eine höhere Funktionssicherheit und einen effizienteren Heizbetrieb erlaubt.

Diese Aufgabe wird durch ein Bechersystem mit den Merkmalen des Anspruchs 1 gelöst.

Vorteilhafte Ausgestaltungen sind in den Unteransprüchen enthalten.

Das erfindungsgemäße beheizbare Bechersystem enthält einen Becher mit einem elektrischen Heizelement, bei dem es sich z. B. - ähnlich der US 6 121 585 - um einen PTC-Widerstand handeln kann. Das Heizelement ist zur Gewährleistung einer Stromzufuhr mit außen am Becher liegenden Kontakten verbunden. Ferner enthält das Bechersystem einen zum Becher korrespondierenden Becherhalter mit elektrischen Kontakten für die Stromzufuhr zum Becher. Das Bechersystem ist dadurch gekennzeichnet, daß die genannten elektrischen Kontakte von Becher und/oder Becherhalter beweglich gelagert sind, und daß sich die elektrischen Kontakte von Becher und Becherhalter durch Magnetkräfte anziehen, wenn der Becher in den Becherhalter eingesetzt ist.

Dadurch, daß bei dem beschriebenen Bechersystem mindestens einer der Kontakte eines Kontaktpaares von Becher und Becherhalter beweglich ist und daß sich die beiden Kontakte durch Magnetkräfte anziehen, wird jederzeit ein guter Kontakt sichergestellt. Aufgrund der Beweglichkeit des mindestens einen Kontaktes ist die Verbindung robust gegen Variationen der Becherposition relativ zum Becherhalter. Ferner erlaubt das durch die Magnetkräfte bewirkte Haften der Kontakte, daß sich die Kontakte in einer Fläche berühren können, so daß ein großer Querschnitt für einen verlustarmen Stromübergang bereitgestellt wird. Nicht zuletzt trägt die Magnetkraft auch erheblich zu einer besseren mechanischen Fixierung des Bechers im Becherhalter bei.

Ein für das beheizbare Bechersystem geeigneter Becher enthält ein elektrisches Heizelement sowie elektrische Kontakte für die Stromzufuhr zum Heizelement, wobei die elektrischen Kontakte als Magnete ausgebildet sind oder aus einem magnetisierbaren Material bestehen. Ferner können die elektrischen Kontakte beweglich gelagert sein, um Toleranzen bei der relativen Positionierung von Becher und Becherhalter im zusammengesetzten Zustand ausgleichen zu Können.

Des weiteren weist ein für das beheizbare Bechersystem geeigneter Becherhalter elektrische Kontakte für die Stromzufuhr zum Becher auf, wobei diese elektrischen Kontakte als Magnete ausgebildet sind oder aus einem magnetisierbaren Material bestehen. Ferner können die elektrischen Kontakte beweglich gelagert sein, um Toleranzen bei der relativen Positionierung von Becher und Becherhalter im zusammengesetzten Zustand ausgleichen zu können.

Das beschriebene beheizbare Bechersystem wird vorteilhafterweise in einem Kraftfahrzeug eingesetzt. Die für eine Beheizung notwendige Stromzufuhr kann dabei dem elektrischen Versorgungssystem des Kraftfahrzeuges entnommen werden. Weiterhin wird der Becherhalter vorzugsweise fest an einer geeigneten Stelle der Konsole angeordnet.

Im Folgenden wird die Erfindung mit Hilfe der Figuren beispielhaft näher erläutert.

Es zeigen:
- Fig. 1: ein erfindungsgemäßes beheizbares Bechersystem, und
- Fig. 2: eine Aufsicht auf die Konsole eines Kraftfahrzeuges mit darin integrierten Becherhaltern.

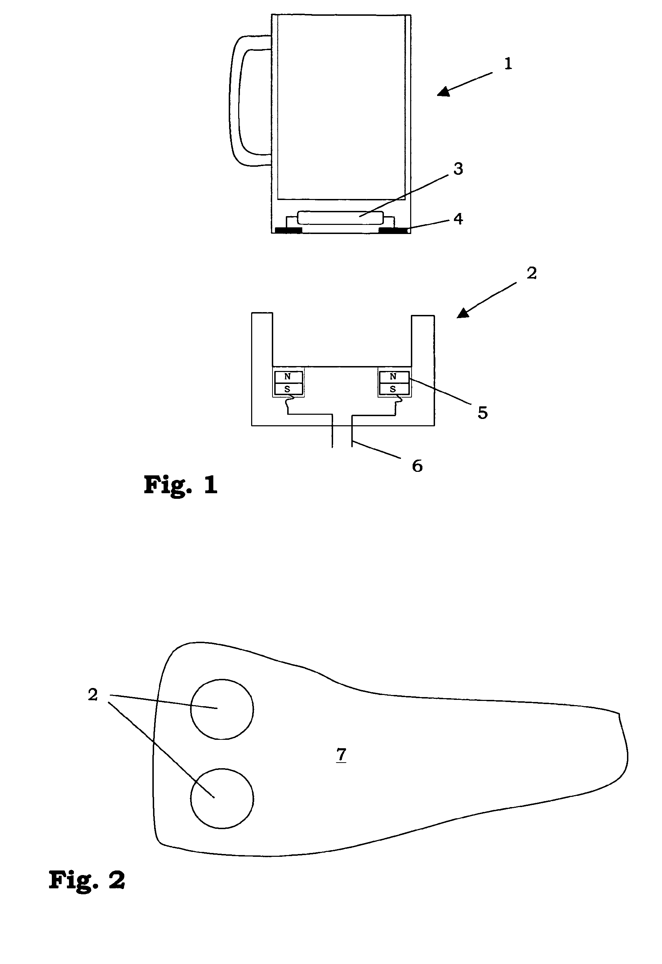

Figur 1 zeigt in einem Querschnitt einen Becher 1, in dem sich eine zu beheizende Flüssigkeit wie zum Beispiel Tee oder Kaffee befinden kann. Der Becher 1 enthält in seinem Boden ein Heizelement 3, welches über elektrische Leitungen mit an der Unterseite des Bechers exponierten Kontakten 4 verbunden ist.

Ferner zeigt Figur 1 im Querschnitt einen Becherhalter 2, welcher eine zum Becher 1 korrespondierende Vertiefung aufweist, um den Becher 1 aufnehmen und mechanisch fixieren zu können. Des Weiteren weist der Becherhalter 2 elektrische Zuleitungen 6 für die Stromzufuhr zum Heizelement 3 auf, wobei die Zuleitungen in zwei am Boden des Becherhalters 2 exponierten elektrischen Kontakten enden. Diese elektrischen Kontakte sind als Magnete 5 ausgebildet und in vertikaler Richtung sowie gegebenenfalls auch in horizontaler Richtung mit einem gewissen Spiel beweglich gelagert. Die bewegliche Lagerung der Kontakte 5 kann dabei zum Beispiel ähnlich wie in der DE 199 30 642 A1 beschrieben erfolgen.

Wenn der Becher 1 in den Becherhalter 2 eingesetzt wird, kommen seinen elektrischen Kontakte 4 über den elektrischen Kontakten 5 des Becherhalters zu liegen. Da die elektrischen Kontakte 4 des Bechers 1 aus einem magnetisierbaren Material wie zum Beispiel Eisen bestehen sollen oder sogar selbst Magnete sind, kommt es zu einer magnetischen Anziehung zwischen den elektrischen Kontakten 4, 5 von Becher 1 und Becherhalter 2 und damit zu einem (Flächen-)Kontakt. In der Regel findet hierbei eine Bewegung der beweglichen Kontakte 5 des Becherhalters 2 statt, welche eventuelle Positionierungsdifferenzen ausgleicht.

Der durch eine Magnetkraft bewirkte beziehungsweise unterstützte Kontakt hat somit den Vorteil, daß er robust gegen Toleranzen in der Relativposition von Becher und Becherhalter ist, daß er einen verlustarmen Flächenkontakt ermöglicht, und daß er zusätzlich zu einer mechanischen Fixierung des Bechers 1 am Becherhalter beiträgt.

Falls die Kontakte 4 des Bechers 1 als Magnete ausgebildet werden, kann der Becher hiermit auch auf magnetisierbaren Untergründen mechanisch stabil abgestellt werden. Ferner kann in diesem Fall die Abstoßung gleichnamiger Pole ei n-gesetzt werden, um bestimmte Kontaktpaarungen von Becher 1 und Becherhalter 2 auszuschließen. Ein elektrischer Kontakt wird in diesem Falle nur dann hergestellt, wenn sich Kontakte 4, 5 mit ungleichnamigen Polen gegenüberliegen.

Figur 2 zeigt schematisch die Aufsicht auf die Konsole 7 eines Kraftfahrzeuges, in welcher zwei erfindungsgemäß ausgestaltete Becherhalter 2 angeordnet sind. Becherhalter können jedoch auch an anderen Positionen wie der Innenseite der Klappe des Handschuhfaches oder an der Rückseite der Rückenlehnen der Vordersitze angeordnet sein, wobei im letztgenannten Falle eine Benutzung durch auf den Rücksitzen befindliche Personen ermöglicht wird.

## Patentansprüche

1. Beheizbares Bechersystem, enthaltend
einen Becher (1) mit einem elektrischen Heizelement (3) sowie elektrischen Kontakten (4) für die Stromzufuhr zum Heizelement;
einen Becherhalter (2) mit elektrischen Kontakten (5) für die Stromzufuhr zum Becher (1),
**dadurch gekennzeichnet, daß**
die elektrischen Kontakte (4, 5) von Becher (1) und/oder Becherhalter (2) beweglich gelagert sind und dass diese sich durch Magnetkräfte anziehen, wenn der Becher (1) in den Becherhalter (2) eingesetzt ist.

2. Beheizbares Bechersystem nach Anspruch 1,
**dadurch gekennzeichnet, daß**
die elektrischen Kontakte des Bechers (2) und/oder des Becherhalters (2) als Magnete oder aus einem magnetisierbaren Material (4) ausgebildet sind.

## Claims

1. Heatable cup system, containing
a cup (1) having an electric heating element (3) and electric contacts (4) for the supply of current to the heating element;
a cup holder (2) having electric contacts (5) for the supply of current to the cup (1),
**characterized in that**
the electric contacts (4, 5) of cup (1) and/or cup holder (2) are mounted moveably, and **in that** said contacts are attracted by magnetic forces when the cup (1) is inserted into the cup holder (2).

2. Heatable cup system according to Claim 1,
**characterized in that**
the electric contacts of the cup (1) and/or of the cup holder (2) are designed as magnets or are formed from a magnetizable material (4).

## Revendications

1. Système de gobelet chauffant, contenant
un gobelet (1) avec un élément chauffant électrique (3) ainsi que des contacts électriques (4) pour l'alimentation en courant à l'élément chauffant ;
un porte-gobelet (2) avec des contacts électriques (5) pour l'alimentation en courant au gobelet (1),
**caractérisé en ce que**
les contacts électriques (4, 5) du gobelet (1) et/ou du porte-gobelet (2) sont montés mobiles et **en ce qu'**ils s'attirent sous l'effet de forces magnétiques lorsque le gobelet (1) est inséré dans le porte-gobelet (2).

2. Système de gobelet chauffant selon la revendication 1,
**caractérisé en ce que**
les contacts électriques du gobelet (1) et/ou du porte-gobelet (2) sont réalisés sous forme d'aimants ou d'un matériau aimantable (4).
